# FASCICULE DE BREVET EUROPEEN

(11) **EP 2 395 562 B1**
(45) Date de publication et mention de la délivrance du brevet: **17.10.2012**
(21) Numéro de dépôt: 11305738.4
(22) Date de dépôt: 10.06.2011
(51) Int. Cl.: H01L 31/048, H01L 31/042

(54) **Structure de solidarisation de panneaux photovoltaïques sur un bâtiment**
Struktur zur festen Verbindung von Fotovoltaikpaneelen auf einem Gebäude
Structure for securing photovoltaic panels to a building

(30) Priorité: 14.06.2010 FR 1054672
(43) Date de publication de la demande: 14.12.2011
(73) Titulaire: Institut de Recherche Fondamentale en Technologies Solaires - IRFTS, 38240 Meylan (FR)
(72) Inventeur: Crasnianski, Serge, 1204 GENEVE (CH)
(74) Mandataire: Vuillermoz, Bruno

(56) Documents cités:
- EP-A1- 2 065 944
- WO-A2-2008/021714
- DE-U1- 20 012 131
- FR-A1- 2 929 301

## Description

### DOMAINE TECHNIQUE

La présente invention se rapporte au domaine des panneaux photovoltaïques de type BIPV (selon l'acronyme anglo-saxon « *Building Integrated Photovoltaics* »), à savoir des systèmes de panneaux photovoltaïques dans lesquels l'élément photovoltaïque assume, outre la fonction de production d'électricité, le rôle de l'un des éléments de construction, tel que la toiture par exemple.

### ART ANTERIEUR

Dans le cadre de mesures incitatives mises en place par les autorités, notamment françaises, en vue de favoriser le développement des sources d'énergie non fossiles, figure la notion d'intégration consistant à conférer aux panneaux photovoltaïques une fonction effective de protection et d'étanchéité au sein du bâtiment sur lequel ils sont rapportés.

De fait, de nombreuses solutions technologiques se sont développées pour, d'une part, assurer la fixation de tels panneaux photovoltaïques sur les toitures, et d'autre part, répondre au cahier des charges fixé par l'administration dans le cadre de cette notion d'intégration.

L'une des difficultés auxquelles on se heurte réside dans l'étanchéité. A cet effet, on a par exemple proposé, dans le document DE-20 2005 015455, une solution technique consistant à assurer l'étanchéité entre les panneaux photovoltaïques et la charpente de la toiture au moyen d'une membrane recouvrant la face supérieure de plaques planes sous jacentes. Cependant, les panneaux proprement dits sont eux-mêmes fixés au niveau de profilés solidarisés par exemple à la charpente, au moyen de vis ou de clous traversant et donc perforant ladite membrane, de sorte que l'étanchéité n'est pas garantie. Au demeurant, cette solution impose la mise en place préalable d'une telle membrane, induisant de fait une perte de temps additionnelle, surenchérissant les coûts globaux.

L'usage s'est fait sentir de la nécessité de mettre au point un dispositif ou structure de fixation de tels panneaux photovoltaïques, qui tout en garantissant l'étanchéité requise, en raison de l'intégration, n'impose pas le recours à une telle membrane.

On a décrit dans le document FR 2 929 301 une structure de fixation de panneaux photovoltaïques sur une toiture, faisant appel à la technologie bien connue des bacs-acier. Cependant, l'étanchéité n'est pas acquise avec de telles structures.

Par ailleurs, dans les installations traditionnelles, les modules photovoltaïques sont connectés de telle sorte que des tensions continues très élevées, typiquement de quelques centaines de volts sont obtenues pour optimiser le rendement des onduleurs traditionnels sur lesquels sont raccordés les modules, soit en série, soit en parallèle.

Ces tensions continues élevées imposent de prendre des précautions importantes, notamment en utilisant un câblage et une connexion spécifiques. Elles entrainent un risque quant à l'intervention des techniciens ou des services de secours sur des toitures comprenant de tels modules photovoltaïques. En effet, même si un incendie a lieu, les modules photovoltaïques peuvent toujours délivrer des tensions élevées qui peuvent entrainer des risques d'électrocution des services de secours tels que les pompiers par exemple.

Il est connu, pour palier cette problématique, d'utiliser des onduleurs basse tension (BT) comme par exemple des micro-onduleurs (MO). Ces types d'onduleurs utilisent des tensions d'entrée allant de 5V à 110V et sont généralement au nombre de un ou moins par module photovoltaïque. Ces onduleurs comprennent une protection de découplage permettant, en cas de coupure sur le réseau d'alimentation domestique, de stopper la production d'électricité photovoltaïque, afin de ne pas risquer d'électrocuter les techniciens ou bien les services de secours qui interviennent sur le réseau.

Il a déjà été proposé des réponses à ce besoin de fournir un ou plusieurs onduleurs du type précité à l'ensemble photovoltaïque.

On connaît par exemple une solution, consistant à fixer un onduleur au dos d'un module. Cette solution fonctionne en pratique, mais forme un bloc lourd et difficile à intégrer. En outre, en raison de ce mode de fixation, il se crée un point chaud au niveau du module, susceptible d'affecter le rendement de ce dernier.

Il résulte de l'état antérieur de la technique une problématique liée à l'intégration de ces onduleurs à l'ensemble photovoltaïque, dans le cadre d'une installation du type intégration toiture.

Dans certains cas, le bâti est recouvert de tuiles de type plat en ciment, terre cuite, carbone, polymère ou métal ou bien recouvert d'ardoises. Une difficulté réside alors dans le fait de fournir au dispositif d'intégration, des abergements standardisés permettant de s'adapter à tous les types de couverture.

A ce jour, afin de mettre en place des systèmes photovoltaïques sur ce type de toiture, il est nécessaire qu'un couvreur intervienne pour adapter une zinguerie spécifique à chaque installation. Outre les frais générés par la main d'oeuvre ainsi déployée, les coûts sont surenchéris de par l'usinage de pièces spécifiques.

De fait, un autre objectif visé par l'invention tend à la simplification et à la standardisation de tels abergements, quel que soit le type de couverture mise en oeuvre.

### EXPOSE DE L'INVENTION

Contrairement aux systèmes de panneaux photovoltaïques à fixer a postériori sur une toiture parachevée, les systèmes de panneaux photovoltaïques de type BIPV sont posés directement sur un bâti, par exemple une charpente de toiture, de manière à être intégrés directement dans la couverture de toit sans nécessiter la mise en oeuvre d'une couverture supplémentaire.

La présente invention a notamment pour but de proposer une nouvelle structure de solidarisation d'au moins un panneau photovoltaïque sur un bâti, et notamment sur une charpente de toiture ou toute autre sous-toiture ou sous-construction, de sorte que le panneau forme tout ou partie de la couverture de toit. En outre, la structure combinée au panneau photovoltaïque doit assurer une bonne étanchéité ou du moins réduire les risques d'infiltration de l'eau dans le bâtiment, et le montage de l'ensemble doit être aisé.

Ainsi, l'invention propose un dispositif d'intégration de panneaux photovoltaïques sur un bâti, en particulier sur une charpente de toiture, comprenant :
- une pluralité de cadres destinés à recevoir les panneaux photovoltaïques, rapportés sur le bâti, lesdits cadres étant définis par un bord périphérique muni d'éléments linéaires faisant saillie par rapport au plan dans lequel s'inscrivent les cadres ;
- des moyens de serrage pour maintenir lesdits panneaux sur les cadres ;
- des moyens de fixation des cadres sur le bâti ;
lesdits cadres se recouvrant ou se chevauchant partiellement les uns sur les autres au niveau des bords qui les définissent, latéralement d'une part et dans le sens de la pente de la toiture d'autre part, les éléments linéaires en saillie dont ils sont munis coopérant les uns avec les autres afin de constituer barrière d'étanchéité.

En d'autres termes, la structure de solidarisation de l'invention se présente sous la forme d'un cadre, et notamment d'un cadre monobloc, exempt de toute matière en son centre, et donc creux, de dimensions standardisées complémentaires aux dimensions standards des panneaux ou modules photovoltaïques, le cadre étant destiné à être fixé directement sur un bâti. Ce cadre est notamment apte à recevoir les lisières latérales d'un panneau photovoltaïque, et il est muni de goulottes ou d'éléments en saillies agencés de manière à réduire l'infiltration de l'eau dans le bâtiment. Chacun des bords longitudinaux du cadre comprend notamment une goulotte interne reliée à une goulotte externe par l'intermédiaire d'une surface support. La goulotte interne est notamment destinée à être positionnée en regard de la face inférieure du panneau, et est en outre destinée à la récupération de condensat. La goulotte externe est notamment destinée à l'écoulement des eaux de pluies.

Ainsi donc, et selon l'invention, le cadre est formé par au moins deux profilés longitudinaux destinés à être agencés dans le sens de la pente de la toiture, également dénommé rampant, et des profilés transversaux supérieur et inférieur, chacun des profilés longitudinaux présentant au moins des goulottes longitudinales externe et interne reliées entre-elles au niveau de leur bord latéral par l'intermédiaire d'une surface support longitudinale destinée à soutenir tout ou partie d'une lisière longitudinale du panneau, ces goulottes étant destinées à reposer sur le bâti. Les termes longitudinaux et transversaux sont à interpréter de manière relative. De fait, l'invention est applicable aussi bien pour des panneaux montés selon une orientation « portrait » que selon une orientation « paysage ».

Selon l'invention, le cadre définit une goulotte continue ou monobloc, c'est-à-dire assure une continuité entre les goulottes orientées perpendiculairement au sens du rampant et les goulottes orientées selon le sens du rampant. On favorise de la sorte l'évacuation des eaux de ruissellement, et corollairement l'étanchéité de l'ensemble.

Avantageusement, le bord latéral libre de la goulotte longitudinale externe du cadre forme une structure de chevron en saillie vers le haut, et est apte à recouvrir le bord latéral libre de la goulotte longitudinale externe d'un cadre adjacent.

Cette faculté de recouvrement des profilés longitudinaux de cadres adjacents, tant dans le sens transversal ou latéral que dans le sens de la pente, permet d'assurer l'étanchéité sans nécessairement mettre en oeuvre des joints de raccordement. Ceci constitue un élément important en termes de gain de temps lors de la pose, et corollairement en termes de réduction des coûts associés.

De préférence, les bords latéraux libres des profilés longitudinaux de chaque cadre sont dimensionnés de manière à permettre un recouvrement par la gauche ou par la droite. Le recouvrement par la gauche correspond au recouvrement du bord latéral libre du profilé longitudinal gauche d'un cadre par le bord latéral libre du profilé longitudinal droit d'un autre cadre adjacent, et le recouvrement par la droite correspond au recouvrement du bord latéral libre du profilé longitudinal droit du cadre par le bord libre du profilé longitudinal gauche dudit autre cadre adjacent. Les termes « gauche » et « droit » se réfèrent à une direction perpendiculaire à la pente de la toiture.

Selon un mode de réalisation de l'invention, le bord latéral de la goulotte longitudinale interne qui est relié à la surface support forme une structure de chevron en saillie vers le haut. Cette forme particulière permet par exemple de soutenir une partie de la face inférieure du panneau photovoltaïque et peut en outre constituer une barrière d'étanchéité.

Par exemple, les moyens de fixation du cadre sur le bâti comprennent un ensemble de vis aptes à coopérer avec des orifices traversants ou usinages réalisés dans la paroi formant le fond de chacune des goulottes longitudinales internes. La fixation du cadre au niveau de la goulotte interne garantit une meilleure étanchéité de la couverture de toit, puisqu'aussi bien, lesdites goulottes internes n'ont pas vocation à recueillir les eaux de ruissellement (pluie ou neige), puisque situées sous les panneaux, et non pas à la jonction de deux panneaux adjacents. Au demeurant, elles sont séparées des goulottes externes par une saillie, les garantissant de toute intrusion des eaux de ruissellement et eaux de pluie.

Selon un mode de réalisation de l'invention, les moyens de serrage peuvent comprendre au moins un cavalier coopérant avec au moins une vis et une patte de fixation de manière à empêcher le soulèvement de la lisière longitudinale du panneau par prise en étau de cette lisière, le cavalier étant destiné à être solidarisé à une portion d'un des profilés longitudinaux définissant les cadres.

Avantageusement, le profilé supérieur du cadre présente au moins une goulotte transversale centrale et des première et deuxième goulottes transversales latérales destinées à reposer sur le bâti :
- la première goulotte transversale latérale étant reliée à l'un des bords de la goulotte centrale par l'intermédiaire d'une première surface support destinée à soutenir la lisière transversale supérieure d'un premier panneau photovoltaïque ;
- et la deuxième goulotte transversale étant reliée à l'autre bord de la goulotte centrale par l'intermédiaire d'une deuxième surface support destinée à soutenir la lisière transversale inférieure d'un deuxième panneau photovoltaïque agencé au dessus du premier panneau dans le sens de la pente.

Par exemple, la première goulotte est destinée à être en regard de la face inférieure du premier panneau, et la deuxième goulotte est destinée à être en regard de la face inférieure du deuxième panneau.

Avantageusement, le profilé supérieur du cadre comprend en outre une surface de recouvrement s'étendant depuis le bord libre de la deuxième goulotte et est apte à soutenir le profilé transversal inférieur d'un cadre adjacent agencé au-dessus dudit cadre dans le sens de la pente.

En d'autres termes, le profilé transversal inférieur d'un premier cadre repose sur ou recouvre la surface de recouvrement d'un deuxième cadre agencé en dessous du premier cadre dans le sens de la pente. De préférence, le profilé transversal inférieur du cadre présente une surface plane apte à reposer sur la surface de recouvrement.

Ce faisant, on aboutit à un système de recouvrement à l'instar de tuiles, permettant de s'affranchir de la mise en oeuvre de tout joint d'étanchéité.

Avantageusement, les goulottes longitudinales externes et la goulotte centrale d'un cadre forment un canal en continu. Ce passage continu permet notamment à l'eau contenue dans la goulotte transversale de s'écouler dans les goulottes longitudinales. En d'autres termes, les goulottes longitudinales et la goulotte centrale forme un canal continu en forme de H.

Selon un mode de réalisation de l'invention, le bord de la première goulotte transversale relié à la première surface support forme une structure de chevron en saillie vers le haut et est apte à empêcher tout glissement, dans le sens de la pente, de la lisière supérieur du panneau.

Selon l'invention, on adjoint à la structure de l'invention des abergements, aptes à coopérer avec les profilés définissant le cadre caractéristique de l'invention, et munis également d'éléments en saillie susceptibles de coopérer avec les goulottes desdits profilés. Les abergements sont en outre susceptibles de présenter un prolongement plan permettant la réception de tuiles plates ou d'ardoises.

Selon l'invention, le cadre et les pièces d'abergement sont réalisés en matière plastique par thermoformage, éventuellement avec plusieurs couches de polymères différents. Le matériau constitutif ou l'une desdites couches présente avantageusement des propriétés de protection contre le rayonnement ultra-violet.

Ces polymères sont avantageusement choisis dans le groupe comprenant le polyéthylène, l'ABS (acrylonitrile butadiène styrène), le PMMA (polymétacrylate de méthyle), les polycarbonates, le polyuréthane, le polychlorure de vinyle, le polyamide, le polystyrène, le polyester et les polyepoxydes.

Dans certains cas, et comme rappelé en préambule, on peut souhaiter associer au panneau photovoltaïque un onduleur basse tension ou micro-onduleur. Selon cette configuration, le cadre de l'invention intègre un élément formant réceptacle, destiné à supporter et/ou recevoir un tel onduleur basse tension ou micro onduleur, permettant, en cas de coupure sur le réseau d'alimentation domestique en électricité, de stopper la production d'électricité photovoltaïque, afin de s'affranchir de tout risque d'électrocution des personnes susceptibles d'intervenir à ce niveau, et notamment des techniciens ou les services de secours.

Avantageusement, le cadre et l'élément formant réceptacle constituent un ensemble monobloc réalisé en matière plastique, et issu de thermoformage.

Selon cette configuration :
- soit le micro-onduleur, une fois positionné dans l'élément formant réceptacle, est noyé dans une couche d'enrobage liquide ou molle (gel) qui se solidifie ensuite, ladite couche étant réalisée en résine époxy, en silicone ou en polyuréthane ;
- soit le micro-onduleur, une fois positionné dans l'élément formant réceptacle, est collé au fond de ce dernier ou bien fixé au moyen de vis ;
- soit le micro-onduleur, une fois positionné dans l'élément formant réceptacle, est recouvert par un couvercle de protection ;
- soit encore, le micro-onduleur, une fois positionné dans l'élément formant réceptacle, est enfermé de manière étanche et des joints sont utilisés pour former une isolation satisfaisant aux normes IP55 ou IP67.

Selon une version de l'invention, les abergements peuvent être constitués de plusieurs éléments, respectivement :
- un premier ensemble comprenant des pièces longitudinales s'adaptant sur les goulottes longitudinales externes ménagées sur les profilés longitudinaux définissant le cadre de l'invention, et de forme complémentaire à celles-ci,
- un deuxième ensemble comprenant des pièces d'angle s'adaptant sur l'intersection entre les profilés longitudinaux et les profilés transversaux dudit cadre ;
- et un troisième ensemble comprenant des pièces transversales s'adaptant sur les goulottes transversales centrales ménagées au niveau du profilé transversal définissant le cadre en coopération avec les profilés longitudinaux, et de forme complémentaire à celles-ci.

Selon cette version, partie au moins des pièces appartenant audit premier ensemble comprend des nervures agencées pour dévier l'écoulement de l'eau. En outre, ces pièces sont également susceptibles de présenter des surépaisseurs ou nervures faisant saillie par rapport au plan qui contient lesdites pièces, aptes à conférer à l'abergement une hauteur constante pour la réception des tuiles ou ardoises.

### BREVE DESCRIPTION DES DESSINS

D'autres caractéristiques et avantages de l'invention ressortiront clairement de la description qui en est faite ci-après, à titre indicatif et nullement limitatif, en référence aux figures annexées, dans lesquelles :
- la figure 1 est une représentation schématique en perspective d'une portion de couverture de toit intégrant une pluralité de panneaux photovoltaïques solidarisés à la charpente au moyen de cadres selon un mode de réalisation de l'invention ;
- la figure 2 est une représentation schématique en perspective d'un cadre selon un mode de réalisation de l'invention ;
- la figure 3 est une vue schématique en section partielle de la couverture de la figure 1 selon l'axe AA' ;
- les figures 4a et 4b sont des vues schématiques respectivement en perspective et en section selon l'axe AA' de la portion référencée Y sur la figure 1 ;
- la figure 5 est une représentation schématique en perspective de la patte de fixation mise en oeuvre au sein des figures 4a et 4b ;
- les figures 6a et 6b sont des vues schématiques respectivement en perspective et en section selon l'axe BB' de la portion référencée X sur la figure 3, illustrant le recouvrement entre deux cadres adjacents disposés côte à côte ainsi que les moyens de fixation et de serrage selon un mode de réalisation de l'invention ;
- la figure 7 est une représentation schématique en perspective de la patte de fixation mise en oeuvre au sein des figures 6a et 6b ;
- la figure 8 est une vue schématique en section du profilé transversal supérieur selon un mode de réalisation de l'invention;
- la figure 9 est une représentation schématique d'un cadre selon un mode de réalisation de l'invention vue de dessus;
- la figure 10 est une représentation schématique du positionnement d'une patte de fixation au niveau de l'un des usinages du cadre, notamment d'un usinage autre que central;
- la figure 11 est une vue analogue à la figure 10, mais correspondant à la mise en place d'une patte de fixation au niveau de l'un des usinages centraux dudit cadre ;
- les figures 12 à 14 illustrent schématiquement trois modes de réalisation du cadre de l'invention apte à recevoir un micro-onduleur;
- les figures 15a et 15b illustrent schématiquement l'un des éléments appartenant à l'ensemble latéral des abergements selon un mode de réalisation de l'invention plus particulièrement destiné à l'intégration de panneaux sur un toit à tuiles plates ou ardoises;
- les figures 16a et 16b illustrent schématiquement des éléments complémentaires aux éléments illustrés au sein des figures 15a et 15b;
- les figures 17a et 17b illustrent schématiquement la coopération de deux pièces précédentes entre elles, aux fins de conférer la planéité à la zone de réception des tuiles plates ou des ardoises;
- les figures 18a et 18b illustrent schématiquement l'un des éléments appartenant à l'ensemble supérieur des abergements du mode de réalisation précédent;
- la figure 19 illustre schématiquement un autre élément de l'ensemble supérieur ;
- les figures 20a à 20c illustrent les étapes de la mise en place des éléments de l'ensemble supérieur.

### EXPOSE DETAILLE DE L'INVENTION

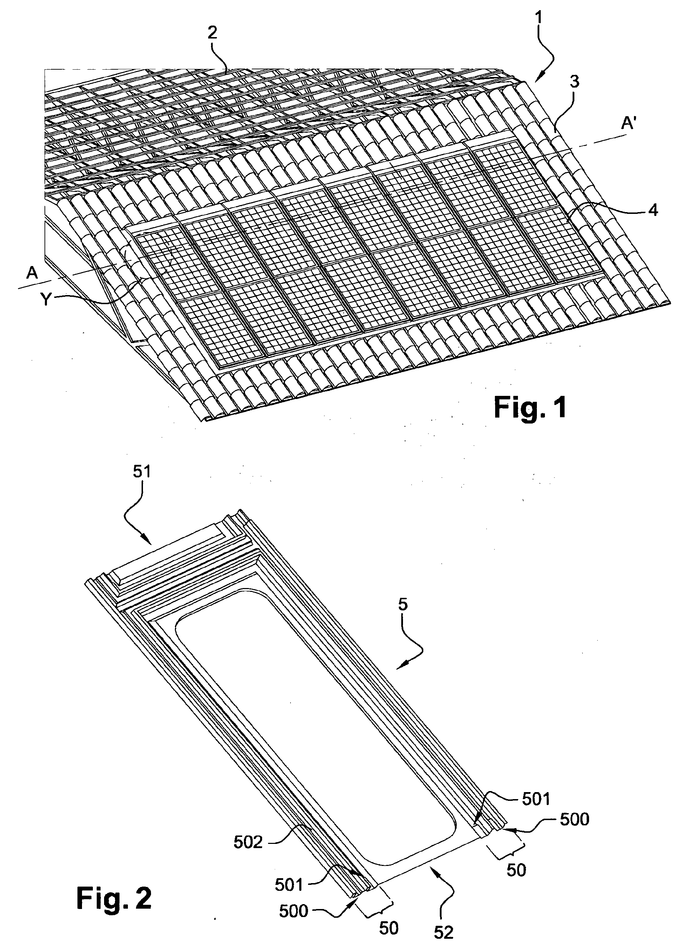

Sur la figure 1, on a schématiquement représenté une portion d'une couverture **1** de toit fixée directement sur un bâti **2**, constitué en l'espèce d'une charpente en bois. La couverture **1** est notamment composée de tuiles **3** et de panneaux photovoltaïques **4**. Comme on peut l'observer, ces panneaux sont intégrés dans ladite toiture, en ce sens qu'ils contribuent à conférer l'étanchéité à cette dernière.

De façon usuelle, un panneau ou module photovoltaïque **4** se présente sous la forme d'un ensemble de cellules photovoltaïques entourées par un cadre en aluminium. Chacun des modules photovoltaïques **4** est fixé directement sur le bâti au moyen d'une structure ou dispositif de solidarisation.

La structure de solidarisation comprend notamment une pluralité de cadres, en l'espèce un cadre par panneau photovoltaïque, sur lequel repose les lisères ou bords dudit panneau, des moyens de serrage aptes à maintenir les lisières du panneau sur le cadre, et moyens de fixation du cadre sur le bâti.

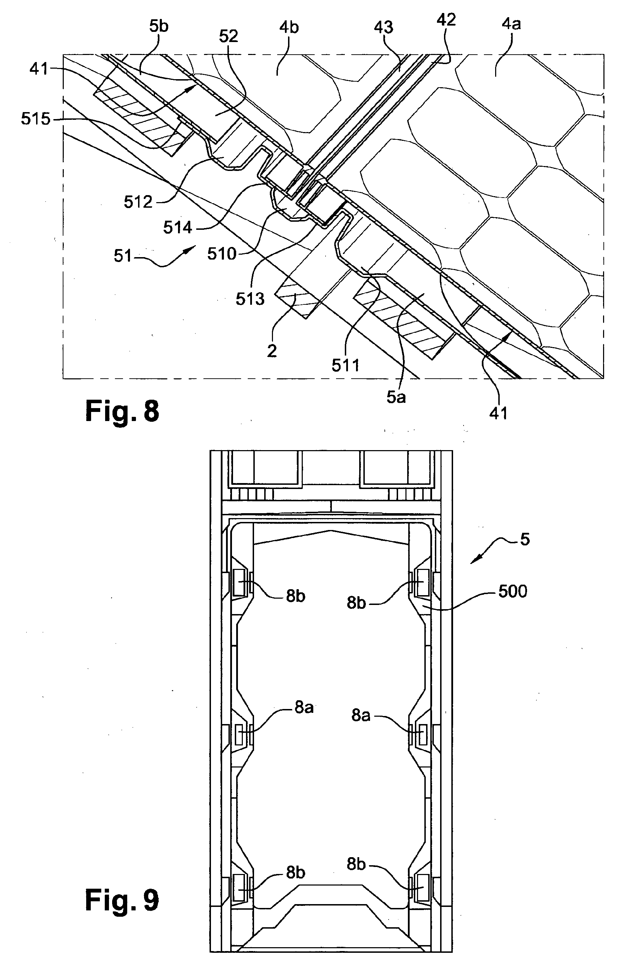

Le cadre 5, illustré en figure 2, est notamment formé par au moins deux profilés longitudinaux 50 destinés à être agencés dans le sens de la pente de la toiture, et des profilés transversaux supérieur 51 et inférieur 52, les termes « supérieur » et inférieur » se référant au sens de la pente. De fait ce cadre est monobloc. Il est typiquement réalisé en thermoplastique traité anti-UV, par exemple par thermoformage. Il peut notamment être réalisé en polyéthylène. Ainsi qu'on peut bien l'observer sur la figure 2, ou encore sur la figure 9, le cadre **5** est complètement ajouré, ou encore, dit autrement, il est dépourvu de toute matière à l'exception des profilés **50**, **51** et **52** qui le définissent. Ce faisant, le caractère ajouré du cadre permet de diminuer les phénomènes de condensation, traditionnellement observés avec les dispositifs de fixation traditionnels.

Le cadre **5** n'a pour fonction que d'assurer d'une part, la réception et la fixation des panneaux photovoltaïques sur le bâti **2**, et d'autre part, l'étanchéité du toit les recevant.

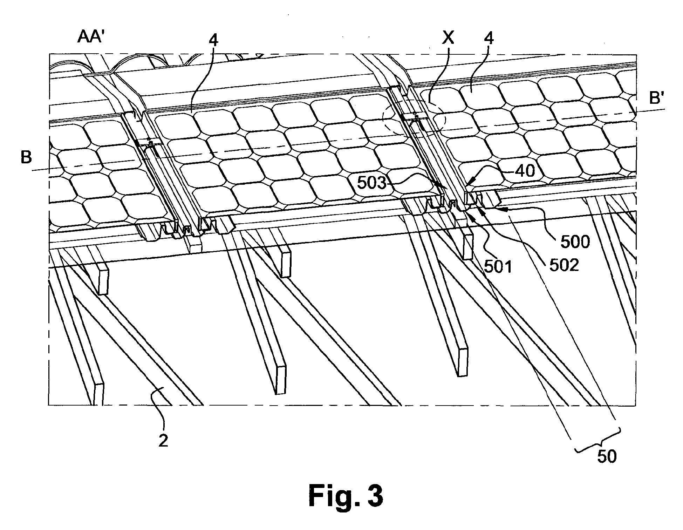

Comme on peut le voir sur les figures 3, 4 et 6, chacun des profilés longitudinaux **50** est notamment formé d'une goulotte longitudinale interne **500**, dont l'un des bords latéraux est relié à l'un des bords latéraux d'une goulotte longitudinale externe **501** par l'intermédiaire d'une surface support longitudinale **502**. Les goulottes interne **500** et externe **501** sont destinées à reposer sur le bâti **2**.

Les goulottes externes **501** sont notamment destinées à l'écoulement des eaux de pluie, et les goulottes internes **500** sont notamment destinées à la récupération de condensat, susceptible de se former sous la toiture ainsi définie.

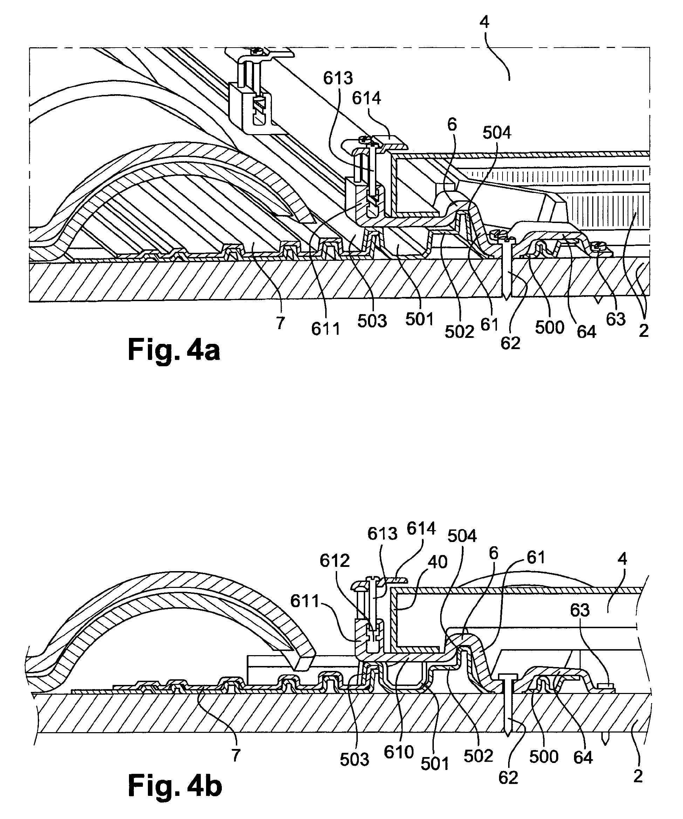

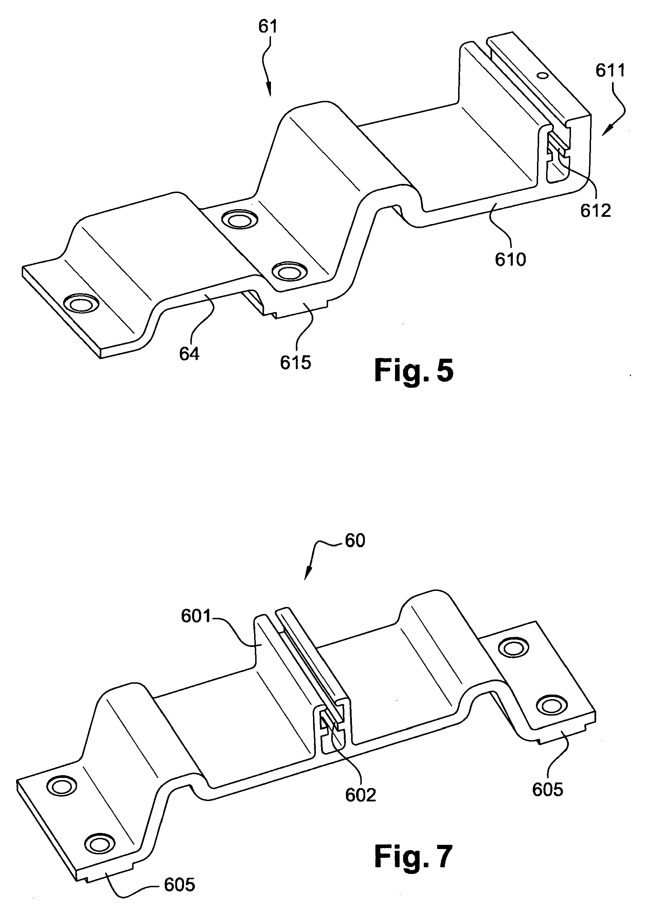

En outre, en référence aux figures 4a et 4b, le bord latéral libre **503** de la goulotte externe **501** de chacun des profilés longitudinaux **50** forme une structure de chevron en saillie vers le haut. Afin de garantir une jonction étanche entre deux cadres adjacents disposés côte à côte, c'est-à-dire dans une direction selon le sens de la pente (comme illustré au sein des figures 5a et 5b), ou avec un abergement **7** (comme illustré sur les figures 4a et 4b), les bords latéraux libres **503** des profilés longitudinaux **50** d'un cadre sont dimensionnés de manière à permettre soit un recouvrement par la gauche, soit un recouvrement par la droite. Les termes « gauche » et « droite » se réfèrent à une direction perpendiculaire au sens de la pente.

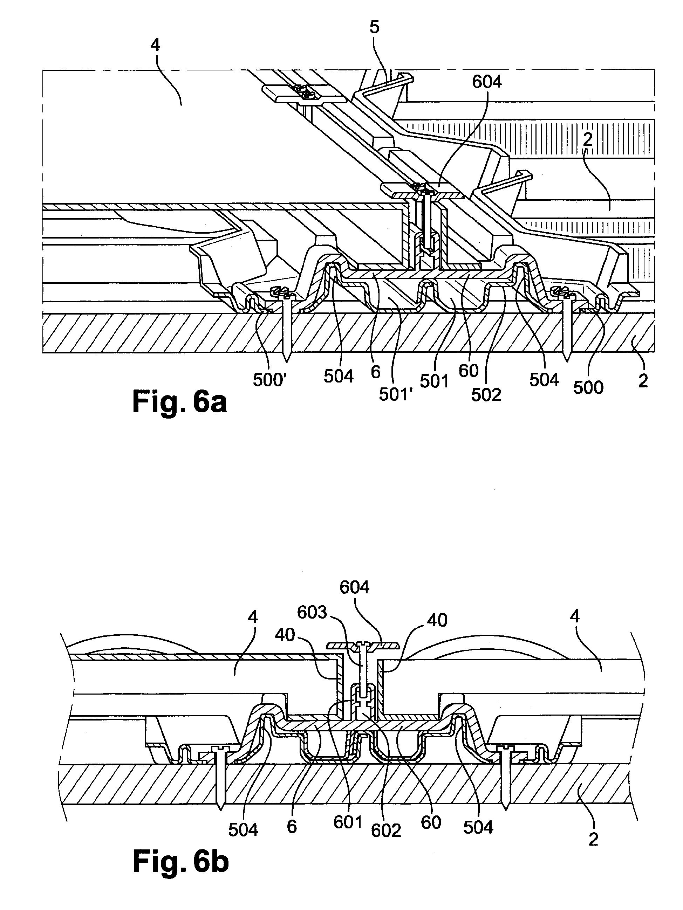

Afin de faciliter la fabrication du cadre **5**, le bord latéral **504** de chaque goulotte longitudinale interne **500** qui est relié à la surface support **502,** peut également présenter une structure de chevron en saillie vers le haut. Par exemple, comme illustré sur les figures 4 et 6, la goulotte interne et la goulotte externe présentent une forme similaire comparable à une sinusoïde.

Par ailleurs, du fait de sa forme particulière en chevron, le bord latéral 504 peut servir à soutenir une partie de la face inférieure du panneau, et constitue en outre une barrière d'étanchéité limitant le passage de fluide autre que condensat dans la goulotte interne.

Afin de garantir une meilleure étanchéité de la couverture, le cadre 5 est solidarisé au bâti au moyen de vis coopérant avec des pattes de fixation traversant des usinages 8 (figure 9) réalisés dans les parois formant le fond des goulottes internes **500**. En d'autres termes, de tels usinages **8** ne sont jamais ménagés au niveau des lieux de recueil ou de collecte des eaux de pluie, puisque les goulottes externes **501** en sont dépourvues.

Par ailleurs, afin de maintenir le panneau **4** sur le cadre **5,** des moyens de serrage **6** sont mis en oeuvre. Ces moyens **6** assurent également la fixation des cadres sur le bâti. Ils comprennent tout d'abord une patte de fixation. Cette patte de fixation est simple **61**, dans le cas où la fixation intervient au voisinage d'un abergement (figures 4a et 4b ; figure 5), ou double **60** dans le cas où lesdits moyens sont utilisés pour la fixation de deux panneaux adjacents (figures 5a et 5b; figure 7).

Ces pattes ou cavaliers sont destinées à être solidarisées aux profilés longitudinaux **50** du cadre **5**, et en outre, assurent la fixation effective du cadre **5** sur le bâti.

En d'autres termes, les pattes de fixation **60, 61** remplissent une double fonction :
- la fixation du cadre **5** sur le toit, et notamment sur la charpente;
- la fixation des panneaux **4** sur le cadre **5** en coopération avec les pattes **614**.

Ainsi, s'agissant de la forme de réalisation décrite en relation avec les figures 4a et 4b, on peut observer que la patte **61** est fixée au bâti au moyen de vis **62, 63**, passant respectivement à travers l'un des usinages **8** ménagés au sein de la goulotte interne **500** du cadre, et en zone encore plus interne par rapport au cadre. La patte assure la fixation effective du cadre sur le bâti de par l'appui qu'elle exerce par sa zone de liaison **64** s'étendant entre les deux vis **62, 63**.

Chaque patte **61** présente, au voisinage de son extrémité libre, et aux fins d'assurer la fixation effective du panneau :
- une première portion **610** destinée à reposer sur la surface support **502** et formant logement pour emboîter la partie inférieure de la lisière longitudinale **40** à maintenir,
- une deuxième portion **611** s'étendant du bord libre de la patte, sensiblement selon une direction perpendiculaire, et définissant un logement **612** apte à coopérer avec une vis de fixation **613** et de serrage d'une patte secondaire **614** du panneau **4** par prise en étau, évitant ainsi le soulèvement de ces lisières longitudinales du panneau.

En outre, chaque patte **61** est pourvue d'un pion de positionnement et de fixation **615**, destiné à traverser l'un des usinages **8** du cadre **5**, pour assurer également la fixation de celui-ci sur le bâti.

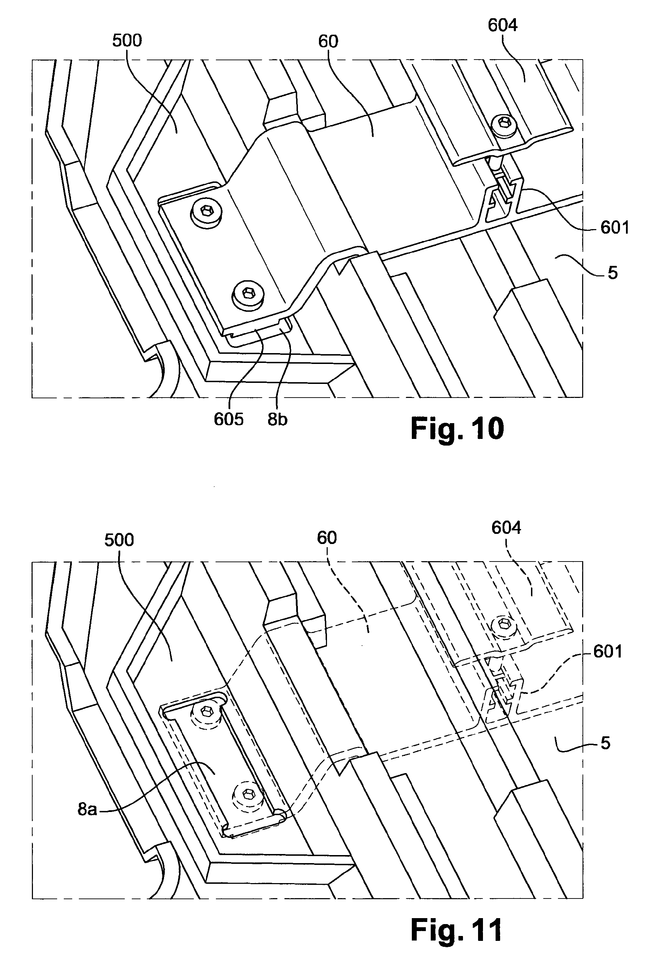

Les dimensions de ce pion de positionnement et de fixation correspondent sensiblement à celles des usinages centraux **8a** du cadre **5**. En d'autres termes, seul un faible jeu du cadre est possible, une fois la patte de fixation en place (voir figure 11), le pion **615** coopérant alors par contact avec les parois définissant l'usinage.

En revanche, les dimensions des usinages **8b** autres que centraux du cadre **5** sont supérieures à celles du pion de fixation **615** (voir figure 10). Typiquement, un jeu de 3 millimètres existe selon les deux directions principales de l'usinage autour du pion **615**. Ce faisant, alors même que le positionnement et la fixation du cadre **5** sur le bâti sont sensiblement figés en sa zone centrale en raison de la sensible correspondance entre les dimensions dudit pion avec celles des usinages centraux **8a**, le cadre **5** est cependant susceptible de pouvoir se dilater relativement facilement de par l'adoption de dimensions supérieures des usinages **8b** autres que centraux, c'est-à-dire des usinages situés au voisinage des extrémités du cadre **5**. A ce niveau, il n'y a donc pas coopération entre le pion **615** et les parois définissant l'usinage **8b**. Il est en effet plus simple de modifier la dimension des usinages (par thermoformage) et de conserver standard les pattes de fixation **61**.

La fixation de deux panneaux adjacents repose sur le même principe, à l'aide des pattes de fixation **60**. Ainsi donc, la patte **60** épouse sensiblement la forme de deux profilés longitudinaux **50** adjacents, qui au demeurant, se chevauchent (voir figures 6a et 6b).

Les deux extrémités libres de la patte **60** sont fixées sur le bâti, chacune à travers un orifice traversant ou usinage **8** respectif de deux cadres adjacents.

En outre, ladite patte exerce un appui sur la portion **504** respective des deux profilés longitudinaux adjacents, fixant de fait les cadres correspondants sur le bâti **2**.

A l'instar de la patte de fixation **61**, la patte de fixation **60** prend appui au niveau de la zone de chevauchement des deux profilés longitudinaux adjacents. A ce niveau, elle présente également une portion **601**, s'étendant sensiblement selon une direction perpendiculaire par rapport à sa direction principale, et définissant un logement **602** apte à coopérer avec une vis de fixation **603** et de serrage d'une patte secondaire **604** de deux panneaux adjacents **4** par prise en étau, évitant ainsi le soulèvement de ces lisières longitudinales du panneau.

Par ailleurs, et là encore à l'instar de la patte de fixation **61**, la patte de fixation **60** est pourvue au niveau de ses deux extrémités, d'un pion de positionnement et de fixation **605**, chacun de ces pions étant destinés à traverser l'un des usinages **8** du cadre 5, pour assurer également la fixation de celui-ci sur le bâti. En fonction du lieu d'implantation de ladite patte de fixation, ledit pion est susceptible ou non de coopérer par contact aves les parois définissant ledit usinage (Cf supra).

Selon un mode de réalisation illustré sur la figure 8, le profilé supérieur **51** présente au moins une goulotte transversale centrale **510** et des première et deuxième goulottes transversales latérales **511**, **512** destinées à reposer sur le bâti. La première goulotte transversale **511** est destinée à être positionnée en regard de la face inférieure **41** d'un premier panneau **4a**, et la deuxième goulotte transversale **512** est destinée à être positionnée en regard de la face inférieure **41** d'un deuxième panneau **4b** agencé au dessus du premier panneau **4a** dans le sens de la pente.

La première goulotte transversale **511** est reliée à l'un des bords de la goulotte centrale **510** par l'intermédiaire d'une première surface support **513** destinée à soutenir la lisière transversale supérieure **42** d'un premier panneau photovoltaïque **4a**. La deuxième goulotte transversale **512** est reliée à l'autre bord de la goulotte centrale **510** par l'intermédiaire d'une deuxième surface support **514** destinée à soutenir la lisière transversale inférieure **4**3 d'un deuxième panneau **4b**.

En outre, le profilé supérieur **51** comprend une surface transversale de recouvrement **515** s'étendant depuis le bord libre de la deuxième goulotte transversale **512**. Cette surface transversale de recouvrement **515** du profilé supérieur d'un cadre peut notamment soutenir le profilé inférieur **52** d'un autre cadre adjacent disposé au dessus dudit cadre dans le sens de la pente. Par exemple, un deuxième cadre est disposé sur le bâti au dessus d'un premier cadre **5a** de sorte que le profilé inférieur **52** du deuxième cadre repose sur la surface transversale de recouvrement **515** du premier cadre **5a**.

A cette fin, le profilé transversal inférieur **52** de chaque cadre peut être formé d'une surface plane reliant l'extrémité inférieure des profilés longitudinaux **50** du cadre (figure 2). De préférence, cette surface plane s'étend entre les bords latéraux libres des goulottes internes **501** des profilés longitudinaux **50**.

En outre, pour optimiser le recouvrement du profilé transversal supérieur et assurer une meilleure étanchéité, le cadre est tel que les extrémités supérieures de ses profilés longitudinaux peuvent être recouvertes par les extrémités inférieures des profilés longitudinaux d'un autre cadre adjacent disposé au dessus dans le sens de la pente.

Par ailleurs, le bord de la première goulotte transversale **511** relié à la première surface support forme également une structure de chevron en saillie vers le haut et est apte à empêcher tout glissement, dans le sens de la pente, de la lisière supérieure du panneau.

Pour garantir un écoulement optimal de l'eau de pluie, les goulottes longitudinales externes **501** sont reliées à la goulotte centrale **510** de manière à former un canal continu, pour permettre à l'eau contenue dans la goulotte transversale centrale de s'écouler dans les goulottes longitudinales externes. Les goulottes longitudinales externes **501** et la goulotte centrale **510** sont agencées de manière à former un canal central continu en forme de H (figure 2).

La structure de solidarisation ainsi proposée se présente donc sous la forme d'une pluralité de cadres, obtenus très simplement par thermoformage, destinés à être fixés directement sur un bâti, et munis de goulottes et de supports des lisières des panneaux photovoltaïques. Ces cadres se chevauchent deux à deux selon les deux directions principales, respectivement dans le sens de la pente du toit, et selon une direction perpendiculaire à celle-ci.

L'agencement des goulottes permet un écoulement transversal et longitudinal de l'eau, et permet en outre la récupération de condensat. En raison de la présente d'une véritable zone d'écoulement des eaux de pluie entre deux panneaux adjacents, l'évacuation desdites eaux n'est plus réduite aux seuls abergements latéraux d'un champ de panneaux. Ce faisant, on s'affranchit de toute limitation en termes de largeur de champs de panneaux.

En outre, les organes de fixation des cadres sur le bâti sont systématiquement positionnés en zone sèche, en ce sens, que les vis correspondantes interagissent avec lesdits cadres au niveau de leur goulotte interne, séparée de la goulotte externe par une barrière **504**.

La structure des moyens de serrage et de fixation permet de faciliter la pose des cadres sur le bâti ainsi que la fixation des panneaux sur les cadres.

En outre, la mise en place des structures de solidarisation et des panneaux photovoltaïques sur un bâti est aisée, ne repose que sur le principe du recouvrement à l'instar des tuiles, de sorte qu'aucun joint d'étanchéité n'est requis.

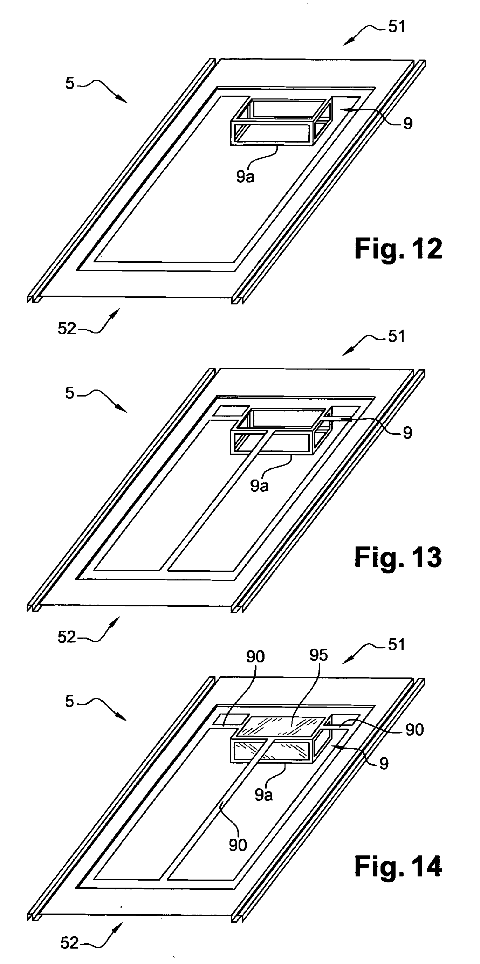

Selon une forme particulière de réalisation de l'invention, plus particulièrement décrite en relation avec les figures 12 à 14, le cadre **5** comprend de plus un élément formant réceptacle **9** agencé à l'intérieur dudit cadre **5** et destiné à supporter ou recevoir un micro-onduleur. Cet élément formant réceptacle **9** est composé de cadres thermoformés **9a** se présentant sous la forme d'un parallélépipède rectangle, dont l'une de ses longueurs supérieures est réalisée par le profilé transversal supérieur **51**. La taille du parallélépipède rectangle est sensiblement supérieure à un micro-onduleur conventionnel, de telle sorte que ce dernier soit emboîté et maintenu dans ledit élément formant réceptacle **9** sans recourir à l'utilisation d'éléments de fixation, tels que des vis par exemple. Chacune des faces du parallélépipède rectangle est ouverte de manière à laisser le passage libre et ne pas gêner les connectiques partant de l'onduleur. Ainsi le plan supérieur du parallélépipède rectangle **9** et le plan général dans lequel s'inscrit la zone ajourée du cadre **5** sont confondus.

Dans l'exemple décrit, l'ensemble constitué du cadre **5** et de l'élément formant réceptacle **9** est monobloc. Il est typiquement réalisé en matériau thermoplastique traité anti-UV, par exemple par thermoformage.

En référence à la figure 13, qui représente un deuxième mode de réalisation du cadre **5** comprenant un élément formant réceptacle **9** pour micro-onduleur, ledit cadre comprend de plus des éléments de renforts constitués de bandes **90** de thermoplastique reliant les cotés supérieurs de l'élément formant réceptacle aux profilés dudit cadre.

En référence à la figure 14, l'élément formant réceptacle **9** reçoit de manière emboîté un micro-onduleur **95**. Celui-ci peut être solidarisé au fond du réceptacle **9** par collage.

Alternativement, une fois le micro-onduleur **95** mis en place au sein du réceptacle **9**, ce dernier est rempli d'une résine époxy, de silicone ou de polyuréthane, constituant une couche d'évacuation de la chaleur générée par le micro-onduleur.

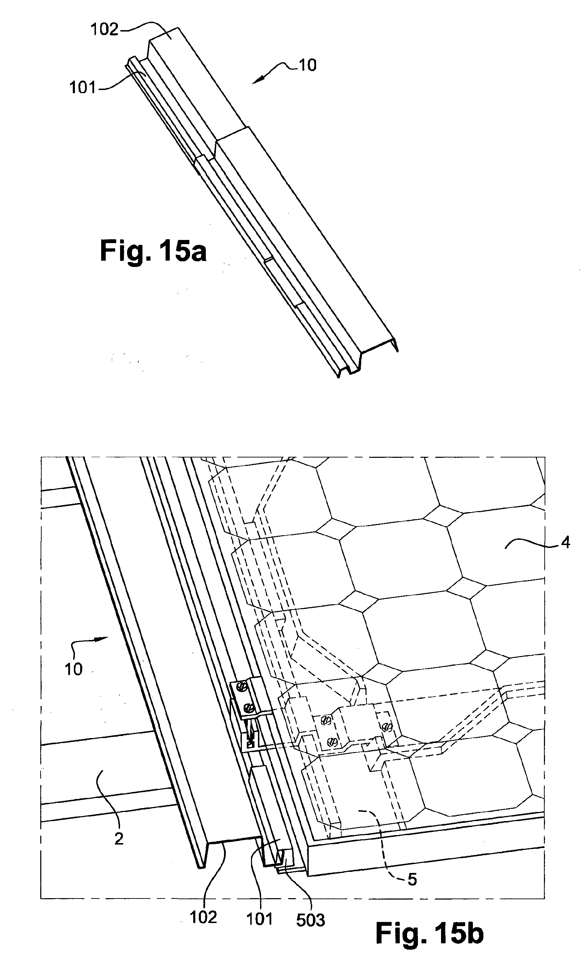

Selon une autre forme de réalisation de l'invention, la structure de solidarisation peut comprendre des abergements constitués de plusieurs types d'éléments, tels que représentés en relation avec les figures 15 à 20.

Ces différents ensembles d'abergements ont notamment pour vocation d'adapter la structure particulière de solidarisation de l'invention à des toits de type ardoises ou tuiles plates.

Ainsi, et à cet effet, ces abergements comprennent tout d'abord un premier ensemble de pièces, destinées à venir se positionner au niveau des bords latéraux du cadre (voir figures 15 - 17).

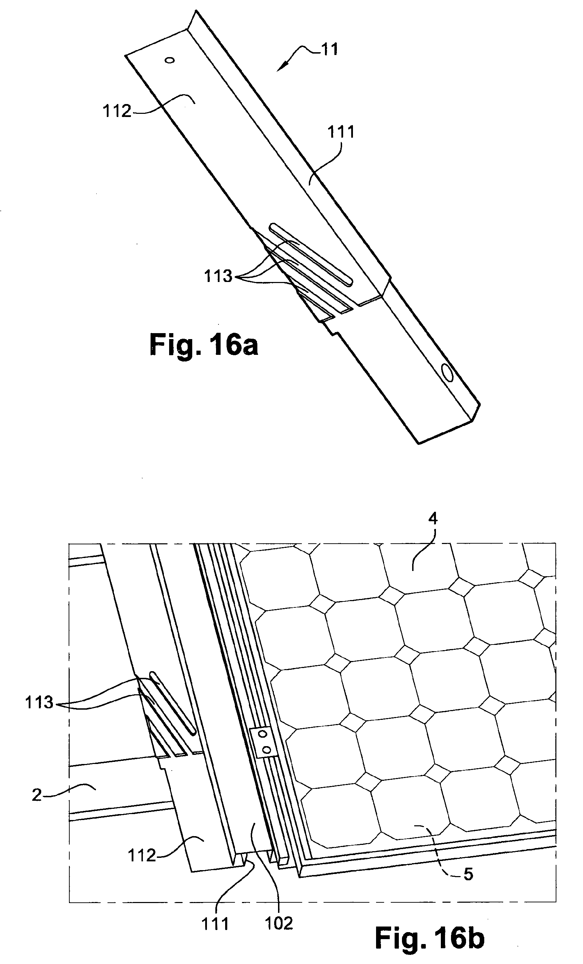

Ces pièces sont respectivement constituées:
- d'une ou plusieurs pièces d'étanchéïté **10**, munies d'une saillie **101**, de largeur réduite, apte à coopérer avec la forme complémentaire **503** du profilé longitudinal d'un cadre **5**, et d'une seconde saillie **102**, parallèle à la première saillie **101**, et de largeur nettement plus importante ;
- d'une ou plusieurs pièces supports **11**, de forme générale plane, et présentant au niveau de l'un de ses bords une cornière **111**, apte à venir s'insérer au sein du volume défini par la seconde saillie **102** de la pièce d'étanchéité **10**, ainsi qu'on peut bien l'observer sur les figures 16b et 16a.

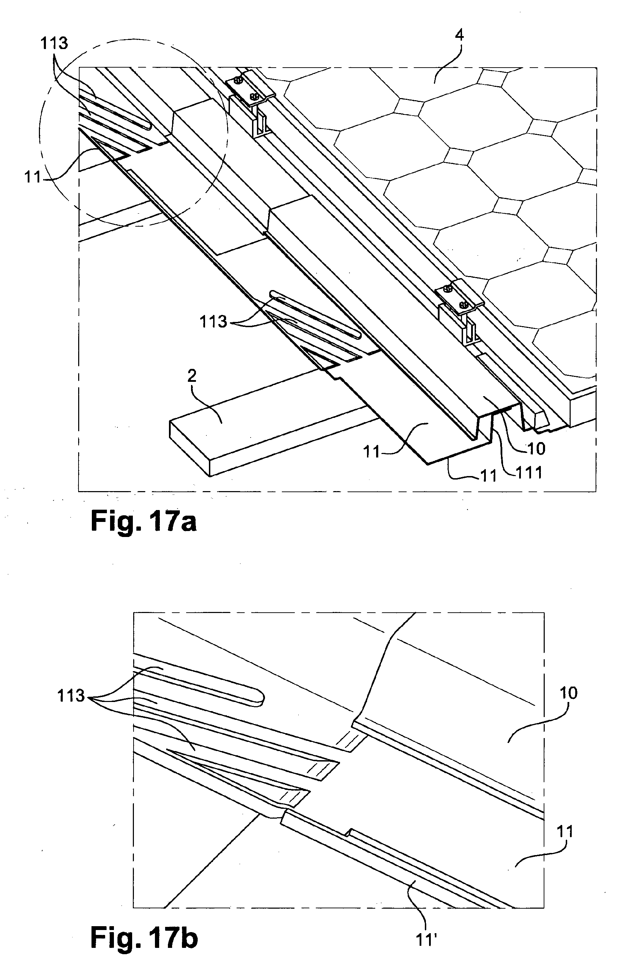

La partie plane **112** des pièces support **11** présentent en outre des zones en saillie ou piliers surélevés **113**, présentant une hauteur typique par rapport à la surface plane **112** comprise entre 1 et 20 millimètres, et préférentiellement de l'ordre de 6 millimètres. Ces piliers ont vocation, comme on peut bien le voir sur les figures 17a et 17b, à conserver parfaitement plan la zone de réception du bord des tuiles plates ou des ardoises, puisqu'ils permettent de tenir compte du recouvrement de l'une des pièces support **11** par une pièce de même nature.

En outre, le positionnement desdites pièces **11** par rapport au cadre 5 peut être réglé par simple coulissement, la cornière **111** dont elles sont munies étant susceptibles de se déplacer au sein du volume défini par ladite seconde saille **102** des pièces d'étanchéité **10**.

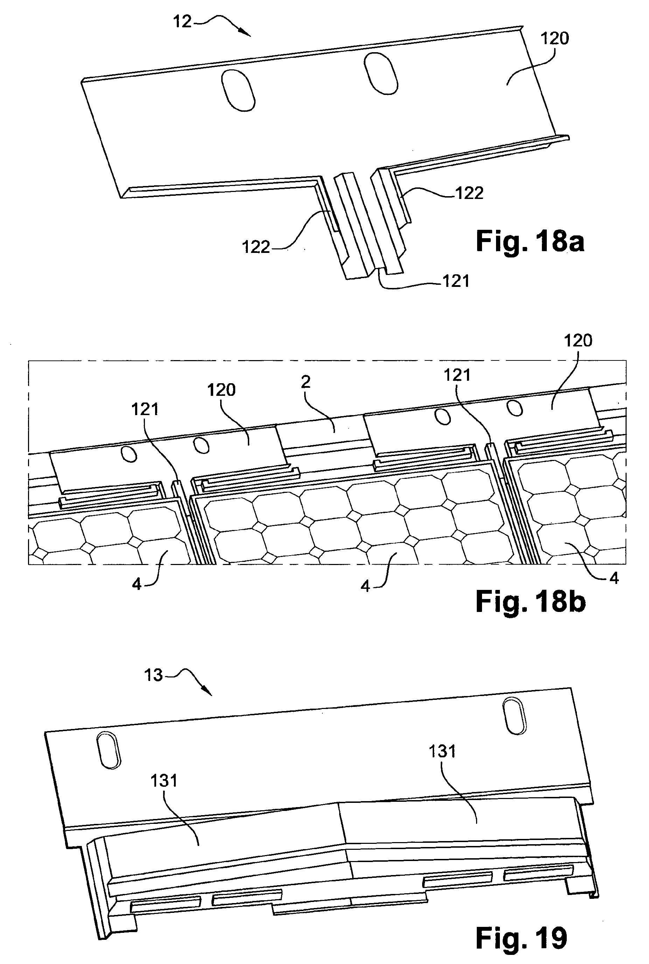

Un second ensemble de pièces est décrit en relation avec les figures 14 et 15. Ainsi, on a décrit sur la figure 18 une pièce **12**, destinée à venir se positionner au niveau de la zone ou profilé supérieur à la jonction entre deux cadres adjacents. A cet effet, elle est munie d'une saillie centrale **121**, apte à venir recouvrir à tout le moins partiellement la zone de chevauchement de deux cadres adjacents au niveau de leurs profilés longitudinaux respectifs.

Cette pièce **12** comporte en outre une partie plane **120** supérieure, fixée sur le bâti.

Enfin, de part et d'autre de la saillie centrale **121**, elle comporte des ailes **122** inclinées, et destinées, ainsi que décrit ci-après, d'une part, à coopérer avec une pièce d'abergement supérieure complémentaire, également à assurer la canalisation des eaux de ruissellement en zone centrale, c'est-à-dire dans la zone séparant deux cadres adjacents dans le sens transversal.

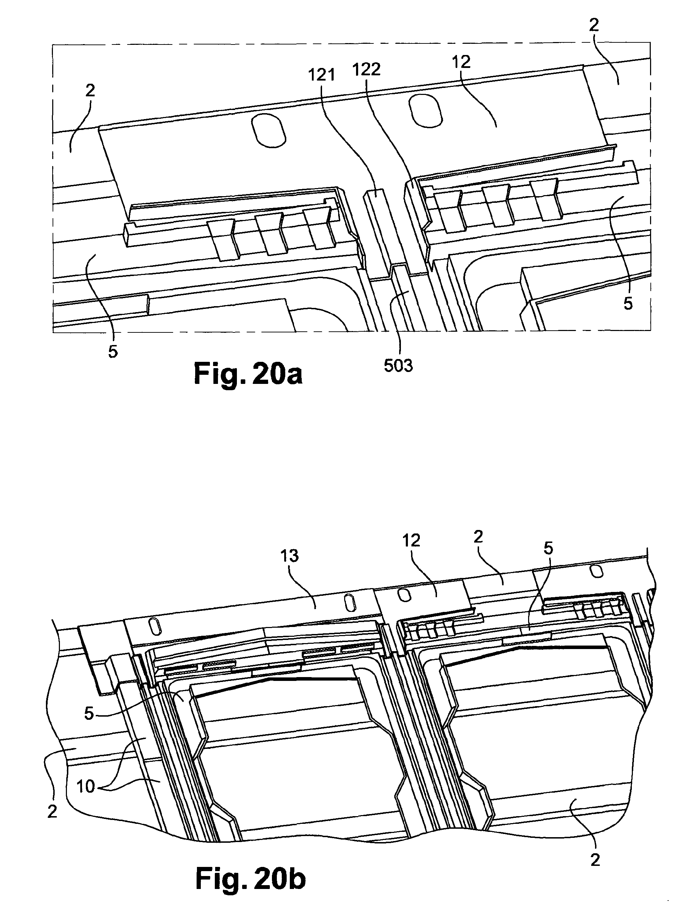

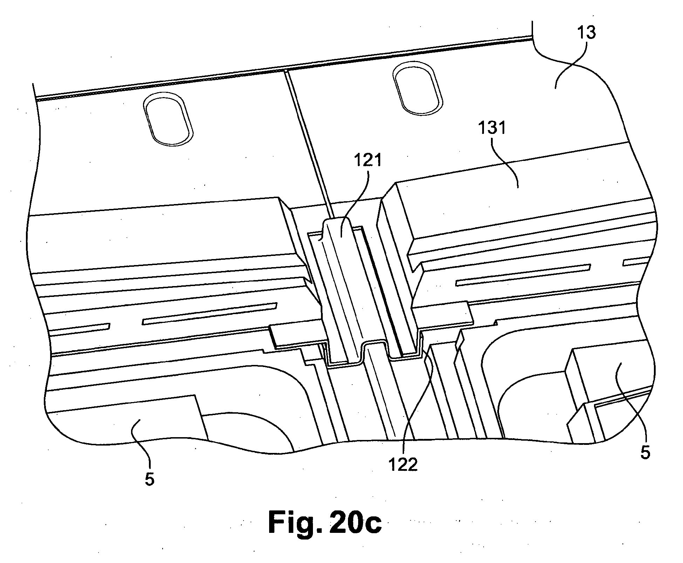

Cette pièce **12** est donc destinée à coopérer avec une pièce complémentaire **13** (voir figures 19 et 20), qui elle n'est située qu'à l'aplomb d'un seul cadre **5**. Elle présente une zone en dièdre **131** jouxtant immédiatement le panneau photovoltaïque, lorsque l'ensemble est en place sur le bâti, cette zone en dièdre étant là encore, destinée à orienter les eaux de pluie dans la zone centrale séparant deux panneaux adjacents, et donc en direction de la rigole centrale d'évacuation des eaux. En raison de sa forme particulière, elle permet de diviser en deux lesdites eaux, et partant, de réduire de manière supplémentaire les risques de fuite.

Les figures 20a à 20c illustrent l'ordre de positionnement des différentes pièces appartenant à l'ensemble supérieur des abergements. On peut y observer des pièces d'angle **14**, positionnées sur et donc en surimposition sur les pièces latérales **10** et **11**, mais sous la pièce supérieure **131**.

On conçoit tout l'intérêt de la structure de l'invention, qui, à l'aide de moyens simples à réaliser et à poser sur une toiture, permet d'obtenir l'intégration souhaitée de panneaux voltaïques, quel que soit le type de toiture existant, et garantissant en outre l'étanchéïté requise.

## Revendications

1. Dispositif d'intégration de panneaux photovoltaïques (4) sur un bâti (2), en particulier sur une charpente de toiture, comprenant :
- une pluralité de cadres (5) destinés à recevoir les panneaux photovoltaïques (4), rapportés sur le bâti, lesdits cadres définissant un bord périphérique muni d'éléments linéaires faisant saillie par rapport au plan dans lequel s'inscrivent les cadres, lesdits cadres (5) étant formés par au moins deux profilés longitudinaux (50) destinés à être agencés dans le sens de la pente de la toiture, et des profilés transversaux supérieur (51) et inférieur (52), chacun des profilés longitudinaux présentant au moins des goulottes longitudinales externe et interne reliées entre-elles au niveau de leur bord latéral par l'intermédiaire d'une surface support longitudinale, ces goulottes étant destinées à reposer sur le bâti ;
- des moyens de serrage (6) pour maintenir lesdits panneaux sur les cadres ;
- des moyens de fixation des cadres sur le bâti ;
les cadres (5) étant ajourés et se recouvrant ou se chevauchant partiellement les uns sur les autres au niveau des bords qui les définissent, latéralement d'une part et dans le sens de la pente de la toiture d'autre part, les éléments linéaires en saillie dont ils sont munis coopérant les uns avec les autres afin de constituer barrière d'étanchéité ; les moyens de serrage (6) étant positionnés en zone sèche, cette dernière étant définie par la goulotte interne, séparée de la goulotte externe ; et
le bord latéral de la goulotte longitudinale interne qui est relié à la surface support forme une structure de chevron en saillie vers le haut, permettant en outre de soutenir une partie de la face inférieure du panneau photovoltaïque et de constituer une barrière d'étanchéité.

2. Dispositif d'intégration de panneaux photovoltaïques (4) sur un bâti (2) selon la revendication 1, ***caractérisé en* ce que** les cadres (5) définissent une goulotte continue ou monobloc, c'est-à-dire assurent une continuité entre les goulottes orientées perpendiculairement au sens du rampant et les goulottes orientées selon le sens du rampant.

3. Dispositif d'intégration de panneaux photovoltaïques (4) sur un bâti (2) selon l'une des revendications 1 et 2, ***caractérisé* en ce que** le bord latéral libre de la goulotte longitudinale externe des cadres (5) forme une structure de chevron en saillie vers le haut, apte à recouvrir le bord latéral libre de la goulotte longitudinale externe d'un cadre adjacent.

4. Dispositif d'intégration de panneaux photovoltaïques (4) sur un bâti (2) selon l'une des revendications 1 à 3, ***caractérisé* en ce que** les moyens de fixation du cadre sur le bâti comprennent des pattes de fixation (6, 60 ,61) aptes à coopérer avec des orifices traversants ou usinages (8) réalisés dans la paroi formant le fond de chacune des goulottes longitudinales internes du cadre.

5. Dispositif d'intégration de panneaux photovoltaïques (4) sur un bâti (2) selon la revendication 4, ***caractérisé :***
- **en ce que** les usinages ou orifices traversants (8, 8a, 8b) ménagés au sein des goulottes longitudinales internes du cadre présentent des dimensions différentes, selon qu'ils sont réalisés en position centrale ou en position extrême,
- et **en ce que** les pattes de fixation (60, 61) sont munies d'au moins un pion de positionnement et de fixation (605, 615), apte à traverser lesdits usinages (8, 8a, 8b) et susceptibles de coopérer par contact avec les parois définissant ces derniers.

6. Dispositif d'intégration de panneaux photovoltaïques (4) sur un bâti (2) selon l'une des revendications 1 à 5, ***caractérisé* en ce qu'**il comprend en outre des abergements, aptes à coopérer avec les profilés définissant le cadre (5), lesdits abergements étant munis d'éléments en saillie susceptibles de coopérer avec les goulottes desdits profilés, et présentant un prolongement plan permettant la réception de tuiles, y compris tuiles plates ou ardoises.

7. Dispositif d'intégration de panneaux photovoltaïques (4) sur un bâti (2) selon l'une des revendications 1 à 6, ***caractérisé* en ce que** les cadres (5) et les pièces d'abergement sont réalisés en matière plastique par thermoformage.

8. Dispositif d'intégration de panneaux photovoltaïques (4) sur un bâti (2) selon la revendication 7, ***caractérisé* en ce que** la matière plastique comprend plusieurs couches de polymères différents.

9. Dispositif d'intégration de panneaux photovoltaïques (4) sur un bâti (2) selon la revendication 7, ***caractérisé* en ce que** la matière plastique intègre au moins un matériau présentant des propriétés de protection contre le rayonnement ultra-violet.

10. Dispositif d'intégration de panneaux photovoltaïques (4) sur un bâti (2) selon l'une des revendication 7 à 9, ***caractérisé* en ce que** la matière plastique est choisie dans le groupe comprenant le polyéthylène, l'ABS (acrylonitrile butadiène styrène), le PMMA (polymétacrylate de méthyle), les polycarbonates, le polyuréthane, le polychlorure de vinyle, le polyamide, le polystyrène, le polyester et les polyepoxydes.

11. Dispositif d'intégration de panneaux photovoltaïques (4) sur un bâti (2) selon l'une des revendications 1 à 10, ***caractérisé* en ce que** le cadre (5) intègre un élément formant réceptacle, destiné à supporter et/ou recevoir un onduleur basse tension ou micro onduleur (95).

12. Dispositif d'intégration de panneaux photovoltaïques (4) sur un bâti (2) selon la revendication 11, ***caractérisé* en ce que** le cadre et l'élément formant réceptacle constituent un ensemble monobloc réalisé en matière plastique, et issu de thermoformage.

13. Dispositif d'intégration de panneaux photovoltaïques (4) sur un bâti (2) selon l'une des revendications 11 et 12, ***caractérisé* en ce que** :
- le micro-onduleur, une fois positionné dans l'élément formant réceptacle, est noyé dans une couche d'enrobage liquide ou molle qui se solidifie ensuite, ladite couche étant réalisée en résine époxy, en silicone ou en polyuréthane ; ou
- le micro-onduleur, une fois positionné dans l'élément formant réceptacle, est collé au fond de ce dernier ou bien fixé au moyen de vis ; ou
- le micro-onduleur, une fois positionné dans l'élément formant réceptacle, est recouvert par un couvercle de protection ; ou
- le micro-onduleur, une fois positionné dans l'élément formant réceptacle, est enfermé de manière étanche et des joints sont utilisés pour former une isolation satisfaisant aux normes IP55 ou IP67.

14. Dispositif d'intégration de panneaux photovoltaïques (4) sur un bâti (2) selon l'une des revendications 1 à 13, ***caractérisé* en ce qu'**il comprend des abergements, constitués de plusieurs éléments, respectivement :
- un premier ensemble comprenant des pièces longitudinales s'adaptant sur les goulottes longitudinales externes ménagées sur les profilés longitudinaux définissant le cadre (5), et de forme complémentaire à celles-ci,
- un deuxième ensemble comprenant des pièces d'angle s'adaptant sur l'intersection entre les profilés longitudinaux et les profilés transversaux dudit cadre ;
- et un troisième ensemble comprenant des pièces transversales s'adaptant sur les goulottes transversales centrales ménagées au niveau du profilé transversal définissant le cadre en coopération avec les profilés longitudinaux, et de forme complémentaire à celles-ci.

15. Dispositif d'intégration de panneaux photovoltaïques (4) sur un bâti (2) selon la revendication 14, ***caractérisé* en ce que** partie au moins des pièces appartenant audit premier ensemble comprend des nervures ou piliers agencées faisant saillie par rapport au plan qui contient lesdites pièces, aptes à conférer à l'abergement une hauteur constante pour la réception des tuiles ou ardoises.

## Claims

1. A device for integrating solar panels (4) on a fixture (2), in particular on a roofing framework, including:
- a plurality of frames (5) intended to accommodate the solar panels (4), added to the fixture, said frames being defined by a peripheral edge fitted with linear elements that project relative to the plane in which the frames are set; said frames (5) being formed by at least two longitudinal sections (50) intended to be arranged in the direction of the roof pitch, and upper (51) and lower (52) transverse sections, each of the longitudinal sections having at least external and internal longitudinal chutes connected to each other at their lateral edge by means of a longitudinal support surface, these chutes being intended to rest on the fixture,
- tightening means (6) for holding said panels on the frames;
- means for securing the frames to the fixture;
the frames (5) being openwork and covering each other or partially overlapping each other at the edges that define them, laterally on the one hand and in the direction of the roof pitch on the other hand, the linear projecting elements with which they are fitted cooperating with each other in order to form a barrier seal ;
the tightening means (6) being positioned in a dry zone, the latter being defined by the internal chute, separated from the external chute ; and
the lateral edge of the internal longitudinal chute which is connected to the support surface forming an upward projecting chevron structure, additionally allowing a part of the lower face of the solar panel to be supported and a barrier seal to be formed.

2. The device for integrating solar panels (4) on a fixture (2) as claimed in claim 1, *wherein* the frames (5) define a continuous or single piece chute, i.e. provide continuity between the chutes oriented perpendicular to the direction of the rake and the chutes oriented in the direction of the rake.

3. The device for integrating solar panels (4) on a fixture (2) as claimed in one of claims 1 and 2, *wherein* the free lateral edge of the external longitudinal chute of the frames (5) forms an upward projecting chevron structure, capable of covering the free lateral edge of the external longitudinal chute of an adjacent frame.

4. The device for integrating solar panels (4) on a fixture (2) as claimed in one of claims 1 to 3, *wherein* the means for securing the frame to the fixture include securing lugs (6, 60, 61) capable of cooperating with through orifices or machined bores (8) implemented in the wall forming the bottom of each of the internal longitudinal chutes of the frame.

5. The device for integrating solar panels (4) on a fixture (2) as claimed in claim 4, *wherein:*
- the machined bores or through orifices (8, 8a, 8b) provided in the internal longitudinal chutes of the frame have different dimensions, according to whether they are implemented in a central position or in an end position,
- and the securing lugs (60, 61) are fitted with at least one positioning and securing pin (605, 615), capable of passing through said machined bores (8, 8a, 8b) and able to cooperate by contact with the walls defining them.

6. The device for integrating solar panels (4) on a fixture (2) as claimed in one of claims 1 to 5, *wherein* it further includes flashings, capable of cooperating with the sections defining the frame (5), said flashings being fitted with projecting elements able to cooperate with the chutes of said sections, and having a plane extension for the accommodation of tiles, including flat tiles or slates.

7. The device for integrating solar panels (4) on a fixture (2) as claimed in one of claims 1 to 6, *wherein* the frames (5) and the flashing components are made of plastic material by thermo-forming.

8. The device for integrating solar panels (4) on a fixture (2) as claimed in claim 7, *wherein* the plastic material includes a plurality of layers of different polymers.

9. The device for integrating solar panels (4) on a fixture (2) as claimed in claim 7, *wherein* the plastic material integrates at least one material that has protective properties against ultra-violet radiation.

10. The device for integrating solar panels (4) on a fixture (2) as claimed in one of claims 7 to 9, *wherein* the plastic material is selected from the group that includes polyethylene, ABS (acrylonitrile butadiene styrene), PMMA (polymethyl metacrylate), polycarbonates, polyurethane, vinyl polychloride, polyamide, polystyrene, polyester and polyepoxides.

11. The device for integrating solar panels (4) on a fixture (2) as claimed in one of claims 1 to 10, *wherein* the frame (5) integrates a receptacle-forming element, intended to support and/or accommodate a low voltage inverter or micro-inverter (95).

12. The device for integrating solar panels (4) on a fixture (2) as claimed in claim 11, *wherein* the frame and the receptacle-forming element constitute an assembly cast in one piece made of plastic material, and produced by thermo-forming.

13. The device for integrating solar panels (4) on a fixture (2) as claimed in one of claims 11 and 12, *wherein:*
- the micro-inverter, once positioned in the receptacle-forming element, is embedded in a liquid or soft coating layer which then solidifies, said layer being made of epoxy resin, silicone or polyurethane; or
- the micro-inverter, once positioned in the receptacle-forming element, is bonded to the bottom thereof or secured by means of screws; or
- the micro-inverter, once positioned in the receptacle-forming element, is covered by a protective lid; or
- the micro-inverter, once positioned in the receptacle-forming element, is enclosed in a sealed way and joints are used to form an insulation that satisfies the standards IP55 or IP67.

14. The device for integrating solar panels (4) on a fixture (2) as claimed in one of claims 1 to 13, *wherein* it includes flashings, comprising a plurality of elements, and respectively:
- a first assembly including longitudinal components that can be fitted to the external longitudinal chutes provided on the longitudinal sections defining the frame (5), and in a way complementary thereto,
- a second assembly including angle components that can be fitted to the intersection between the longitudinal sections and the transverse sections of said frame;
- and a third assembly including transverse components that can be fitted to the central transverse chutes provided on the transverse section defining the frame in cooperation with the longitudinal sections, and in a way complementary thereto.

15. The device for integrating solar panels (4) on a fixture (2) as claimed in claim 14, *wherein* some at least of the components belonging to said first assembly include ribs or pillars arranged to project relative to the plane which contains said components, capable of giving the flashing a constant height for the accommodation of tiles or slates.

## Patentansprüche

1. Vorrichtung zur Anbringung von Fotovoltaikplatten (4) an einem Gestell (2), insbesondere einem Dachstuhlgerüst, Folgendes umfassend:
- eine Mehrzahl von auf dem Gestell angebrachten Rahmen (5), die dazu bestimmt sind, die Fotovoltaikplatten (4) aufzunehmen, wobei die Rahmen einen Umfangsrand bilden, der mit linearen Elementen ausgestattet ist, die in Bezug auf die Ebene vorstehen, in die sich die Rahmen einordnen, wobei die Rahmen (5) durch mindestens zwei Längsprofile (50), die dazu bestimmt sind, in der Neigungsrichtung des Dachs angeordnet zu sein, und obere (51) und untere (52) Querprofile gebildet sind, wobei jedes der Längsprofile zumindest äußere und innere Längsrinnen aufweist, die untereinander im Bereich ihres Seitenrands mittels einer Längsauflagefläche verbunden sind, wobei diese Rinnen dazu bestimmt sind, auf dem Gestell aufzuliegen;
- Klemmmittel (6), um die Platten an den Rahmen zu halten;
- Mittel zur Befestigung der Rahmen an dem Gestell;
wobei die Rahmen (5) mit einem Durchbruch versehen sind und sich gegenseitig teilweise im Bereich der sie bildenden Ränder einerseits seitlich und andererseits in der Neigungsrichtung des Dachs überdecken oder überlagern, wobei die vorstehenden linearen Elemente, mit denen sie ausgestattet sind, gegenseitig zusammenwirken, um eine Dichtigkeitssperre zu bilden; wobei die Klemmmittel (6) in einer Trockenzone angeordnet sind, wobei diese Letztgenannte durch die von der äußeren Rinne getrennte innere Rinne definiert ist; und
der Seitenrand der inneren Längsrinne, der mit der Auflagefläche verbunden ist, eine nach oben vorstehende Sparrenstruktur bildet, die es darüber hinaus ermöglicht, einen Teil der Unterseite der Fotovoltaikplatte zu unterstützen und eine Dichtigkeitssperre zu bilden.

2. Vorrichtung nach Anspruch 1 zur Anbringung von Fotovoltaikplatten (4) an einem Gestell (2), **dadurch gekennzeichnet, dass** die Rahmen (5) eine durchgehende oder aus einem Stück bestehende Rinne definieren, d.h. eine Durchgängigkeit zwischen den senkrecht zur Dachschrägenrichtung ausgerichteten Rinnen und den in der Dachschrägenrichtung ausgerichteten Rinnen sicherstellen.

3. Vorrichtung nach einem der Ansprüche 1 und 2 zur Anbringung von Fotovoltaikplatten (4) an einem Gestell (2), **dadurch gekennzeichnet, dass** der freie Seitenrand der äußeren Längsrinne der Rahmen (5) eine nach oben vorstehende Sparrenstruktur bildet, die den freien Seitenrand der äußeren Längsrinne eines benachbarten Rahmens aufnehmen kann.

4. Vorrichtung nach einem der Ansprüche 1 bis 3 zur Anbringung von Fotovoltaikplatten (4) an einem Gestell (2), **dadurch gekennzeichnet, dass** die Mittel zur Befestigung der Rahmen an dem Gestell Befestigungsbügel (6, 60, 61) umfassen, die mit Durchgangsöffnungen oder Ausnehmungen (8) zusammenwirken können, die in der Wand hergestellt sind, die den Boden jeder der inneren Längsrinnen des Rahmens bildet.

5. Vorrichtung nach Anspruch 4 zur Anbringung von Fotovoltaikplatten (4) an einem Gestell (2), **dadurch gekennzeichnet:**
- **dass** die Ausnehmungen oder Durchgangsöffnungen (8, 8a, 8b), die in den inneren Längsrinnen des Rahmens ausgebildet sind, je nachdem, ob sie in zentraler Stellung oder äußerer Stellung hergestellt sind, unterschiedliche Abmessungen aufweisen,
- und **dass** die Befestigungsbügel (60, 61) mit mindestens einem Positionierungs- und Befestigungszapfen (605, 615) ausgestattet sind, der die Ausnehmungen (8, 8a, 8b) durchqueren und mit den diese bildenden Wänden zusammenwirken kann.

6. Vorrichtung nach einem der Ansprüche 1 bis 5 zur Anbringung von Fotovoltaikplatten (4) an einem Gestell (2), **dadurch gekennzeichnet, dass** sie darüber hinaus Einfassungen umfasst, die mit den den Rahmen (5) bildenden Profilen zusammenwirken können, wobei die Einfassungen mit vorspringenden Elementen ausgestattet sind, die mit den Rinnen der Profile zusammenwirken können und eine flache Verlängerung aufweisen, die die Aufnahme von Ziegeln, einschließlich Flachziegeln oder Dachschiefer ermöglicht.

7. Vorrichtung nach einem der Ansprüche 1 bis 6 zur Anbringung von Fotovoltaikplatten (4) an einem Gestell (2), **dadurch gekennzeichnet, dass** die Rahmen (5) und die Einfassungsteile durch Wärmeformen aus Kunststoff hergestellt sind.

8. Vorrichtung nach Anspruch 7 zur Anbringung von Fotovoltaikplatten (4) an einem Gestell (2), **dadurch gekennzeichnet, dass** der Kunststoff mehrere Schichten von verschiedenen Polymeren umfasst.

9. Vorrichtung nach Anspruch 7 zur Anbringung von Fotovoltaikplatten (4) an einem Gestell (2), **dadurch gekennzeichnet, dass** in den Kunststoff mindestens ein Material integriert ist, das Schutzeigenschaften gegen ultraviolette Strahlung aufweist.

10. Vorrichtung nach einem der Ansprüche 7 bis 9 zur Anbringung von Fotovoltaikplatten (4) an einem Gestell (2), **dadurch gekennzeichnet, dass** der Kunststoff aus der Gruppe ausgewählt ist, die Polyethylen, ABS (Acrylnitril-Butadien-Styrol), PMMA (Polymethylmetacrylat), Polycarbonate, Polyurethan, Polyvinylchlorid, Polyamid, Polystyrol, Polyester und Polyepoxide umfasst.

11. Vorrichtung nach einem der Ansprüche 1 bis 10 zur Anbringung von Fotovoltaikplatten (4) an einem Gestell (2), **dadurch gekennzeichnet, dass** in den Rahmen (5) ein eine Aufnahme bildendes Element integriert ist, das dazu bestimmt ist, einen Niederspannungswechselrichter oder Mikrowechselrichter (95) zu haltern und/oder aufzunehmen.

12. Vorrichtung nach Anspruch 11 zur Anbringung von Fotovoltaikplatten (4) an einem Gestell (2), **dadurch gekennzeichnet, dass** der Rahmen und das die Aufnahme bildende Element eine aus einem Stück bestehende Einheit bilden, die aus Kunststoff hergestellt und das Ergebnis einer Wärmeformung ist.

13. Vorrichtung nach einem der Ansprüche 11 und 12 zur Anbringung von Fotovoltaikplatten (4) an einem Gestell (2), **dadurch gekennzeichnet, dass**:
- der Mikrowechselrichter, sobald er in dem die Aufnahme bildenden Element angeordnet ist, in eine flüssige oder weiche Umhüllungsschicht eingebettet wird, die dann fest wird, wobei die Schicht aus Epoxidharz, Silikon oder Polyurethan besteht; oder
- der Mikrowechselrichter, sobald er in dem die Aufnahme bildenden Element angeordnet ist, an dessen Boden angeklebt oder aber mittels Schrauben befestigt wird; oder
- der Mikrowechselrichter, sobald er in dem die Aufnahme bildenden Element angeordnet ist, mit einem Schutzdeckel abgedeckt wird; oder
- der Mikrowechselrichter, sobald er in dem die Aufnahme bildenden Element angeordnet ist, dicht eingeschlossen wird und Dichtungen dazu verwendet werden, eine Isolation zu bilden, die die Normen IP55 oder IP67 erfüllt.

14. Vorrichtung nach einem der Ansprüche 1 bis 13 zur Anbringung von Fotovoltaikplatten (4) an einem Gestell (2), **dadurch gekennzeichnet, dass** sie Einfassungen umfasst, die jeweils aus mehreren Elementen bestehen:
- einer ersten Einheit, die Längsteile umfasst, die sich an die äußeren Rinnen, die an den den Rahmen (5) bildenden Längsprofilen ausgebildet sind, anpassen und von komplementärer Form zu diesen sind,
- einer zweiten Einheit, die Winkelstücke umfasst, die sich an den Übergang zwischen den Längsprofilen und den Querprofilen des Rahmen anpassen;
- und einer dritten Einheit, die Querteile umfasst, die sich an die mittleren Rinnen, die im Bereich des Querprofils ausgebildet sind, das in Zusammenwirkung mit den Längsprofilen den Rahmen bildet, anpassen und von komplementärer Form zu diesen sind.

15. Vorrichtung nach Anspruch 14 zur Anbringung von Fotovoltaikplatten (4) an einem Gestell (2), **dadurch gekennzeichnet, dass** zumindest ein Teil der zur ersten Einheit gehörenden Teile Rippen oder Erhebungen, die vorstehend in Bezug auf die diese Teile enthaltenden Ebene ausgebildet sind, umfasst, die der Einfassung eine konstante Höhe zur Aufnahme von Ziegeln oder Dachschiefer verleihen können.
